# EUROPEAN PATENT SPECIFICATION

(11) **EP 0 790 179 B1**
(45) Date of publication and mention of the grant of the patent: **24.04.2002**
(21) Application number: 97101928.6
(22) Date of filing: 06.02.1997
(51) Int. Cl.: B63J 2/04, F24F 1/00

(54) **Air-conditioning device particularly for cruise ship cabins**
Klimagerät insbesondere für Kreuzfahrtschiff-Kabinen
Dispositif de climatisation en particulier pour les cabines d'un bateau de croisière

(30) Priority: 16.02.1996 IT TV960020
(43) Date of publication of application: 20.08.1997
(73) Proprietor: FINCANTIERI CANTIERI NAVALI ITALIANI S.p.A., I-34121 Trieste (IT)
(72) Inventor: Musella, Pasquale, 34127 Trieste (IT)
(74) Representative: Modiano, Guido, Dr.-Ing.

(56) References cited:
- EP-A- 0 235 007
- DE-A- 2 845 298
- GB-A- 2 173 292
- US-A- 4 660 389

## Description

The present invention relates to an air-conditioning device particularly for cruise ship cabins.

Shipowners currently require conditioning systems for the passenger cabins of cruise ships of the so-called centralized double-duct type (with one duct for conveying cold air and one for conveying warm air) or of the so-called single-duct type (wherein cold air is conveyed and an electric resistor is used to heat it).

In these conventional systems, from the thermodynamic point of view, the air is treated in a central conditioning unit located in a station within the ship and serving several cabins simultaneously.

These conventional solutions remove 100% of the outside air or recirculate 70% of the entire volume of air to be treated and therefore 30% of outside air.

These systems, while meeting the temperature and humidity requirements for cabin interiors mandated by health authorities for each passenger, nonetheless have the drawback, for passenger ships, that they take up spaces which are useful for the accommodation of the passengers owing to the considerable size of the ventilation machines, with consequent high operating, maintenance, and installation costs.

In these conventional conditioning systems described above, the air is therefore treated in a single conditioning unit serving a plurality of cabins simultaneously as well as the associated corridors.

In these systems the air is generally fed into the cabins through one or more ceiling diffusers and is partially removed through the toilets (approximately 30%) and through a cabin/corridor transfer grille for the remaining 70%.

However, the presence of these grilles is the source of some drawbacks: the passage of air from the cabin to the corridor entails that the smoke of a fire that has developed in a cabin may enter the corridor through the grille and that a certain amount of noise passes from the cabins to the corridors, said noise being also caused by the operation of the fans installed in said cabins.

Moreover, each cabin is provided with electromechanical systems for adjusting the flow-rate in order to control the conditioning system of the individual cabin independently of the others.

Small cabinets known as "fan coils" were conventionally installed inside the main room of the cabin. They were usually placed on the floor and were provided with a double pipe (for the introduction of hot and cold water): however, this solution has not proved optimum, since said devices were still significantly bulky with respect to the volume of the cabins and were at the same time noisy, since they were located in the same room wherein the passenger was supposed to rest.

Moreover, it has been noted that in this solution the use of a double-pipe system increases the possibility of water leaks as well as overall operating costs.

Finally, although the possible placement of the fan coils in the lavatory may partially solve the noise problem, it would not solve the bulk problem and indeed it would worsen it in view of the need to provide a larger space for the lavatory.

Moreover, designing the lavatory is made more complex and its cost is increased, since said lavatory must contain said fan coil and the air ducts.

EP-A-0 255 007 discloses an air conditioning device as defined in the precharacterizing portion of the appended claim 1.

A principal aim of the present invention is therefore to solve the described problems, eliminating the drawbacks of the cited prior art by providing a device which allows to recover useful spaces inside the ship, reducing the number of central conditioning units that serve the cabins.

Within the scope of this aim, an important object is to provide a device that allows to condition each individual cabin in compliance with current temperature and humidity conditions prescribed by contract and required by health authorities.

Another object is to provide a device allowing high enthalpy recovery and an energy saving according to the actual need to condition a cabin or not.

Another important object is to provide a device allowing to increase ship safety by eliminating the possibility for smoke originated by a possible cabin fire to spread to a corridor.

Another important object is to provide a device increasing comfort for the individual passenger inside each cabin, reducing its noise level and allowing simple and customizable adjustment of the system.

Another object is to provide a device allowing very easy and quickly executable maintenance.

Another object is to provide a device ensuring a minimum of comfort in the cabin even in case of failure of the conditioning unit.

Another object is to provide a device which can be produced with low costs and can be obtained with conventional machines and equipment.

This aim, these objects, and others which will become apparent hereinafter are achieved by an air-conditioning device as defined in the appended claims.

The characteristics and advantages of the invention will become apparent from the following detailed description of a particular embodiment thereof, illustrated only by way of non-limitative example in the accompanying drawings, wherein:

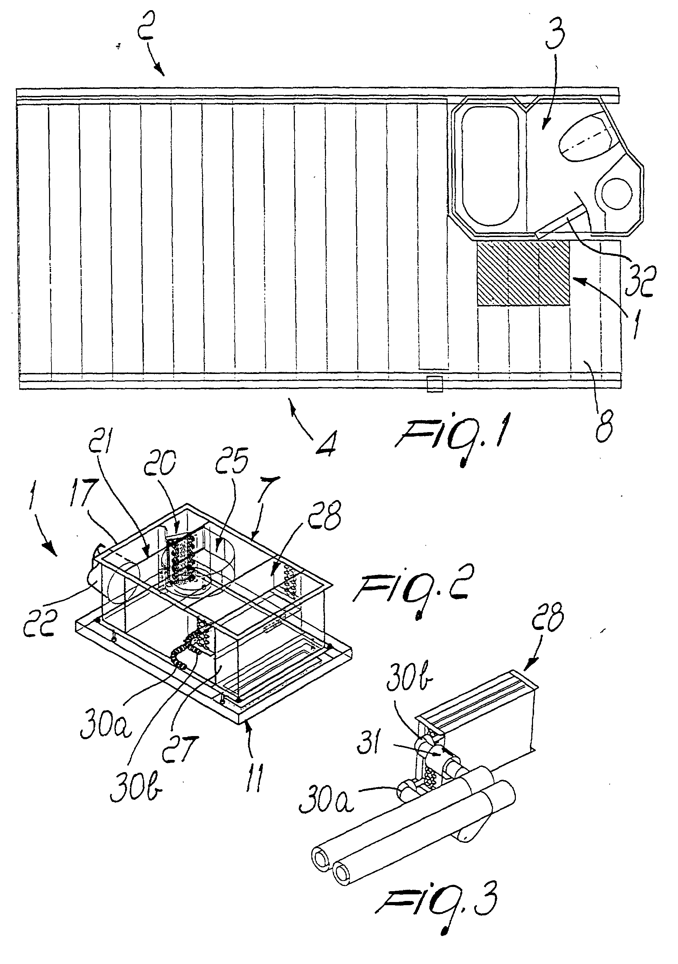

figure 1 is a schematic top view of a cabin, showing the location of the conditioning device;
figure 2 is a perspective view of the invention in phantom lines;
figure 3 is a perspective view of the water coil unit;

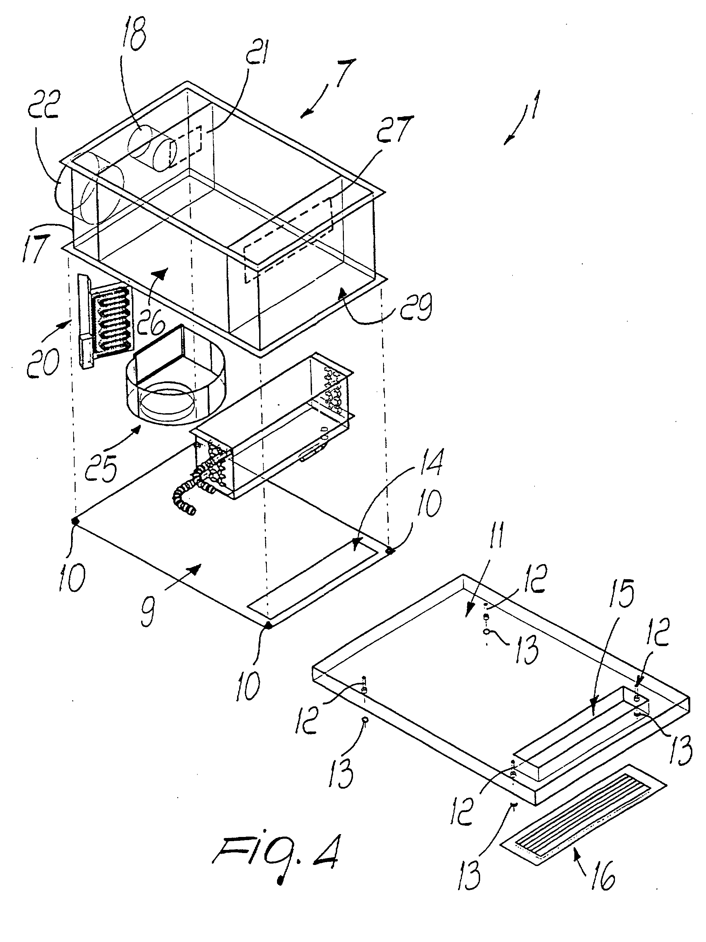

figure 4 is an exploded view of the components of the invention;
figure 5 is a top perspective view of the ceiling installation of the invention;

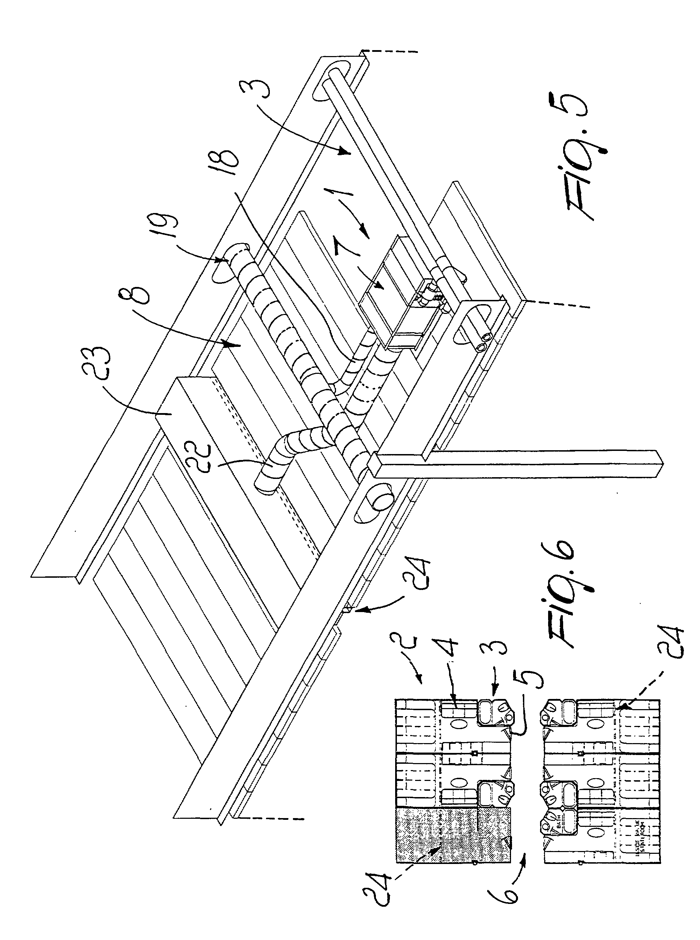

figure 6 is a schematic plan view of a possible arrangement of a plurality of cabins.

Reverting to the above figures, the reference numeral 1 designates the air-conditioning device according to the present invention, which is used particularly in cabins, generally designated by the reference numeral 2, of cruise ships.

Said cabins are substantially divided into a lavatory designated by the reference numeral 3, and into a main room designated by the reference numeral 4, the cabin being connected to a corridor 6 by means of a door 5.

Said doors 5 are of the fire-resisting type and therefore have no grille for connecting the interior of the cabin and the corridor 6.

The air-conditioning device is constituted by a box-shaped structure 7 which can be arranged at the ceiling 8 of the cabin 2 at the main room 4 of said cabin, preferably in a region adjacent to the lavatory 3.

Said box-shaped structure, which is preferably parallelepiped-shaped, can be inspected internally since it has a lower access panel 9, which can be removed by means of appropriate screw-on knobs 10 and is in turn closed in a downward region by a covering panel 11 belonging to the ceiling of the cabin and supported by the deckhead of the ceiling through adapted screws 12, adapted covering plugs 13 being advantageously associated with the head of said screws.

A first 14 and a second 15 openings are formed respectively at the lower access panel 9 and at the covering panel 11; said second opening has an inward-folded perimetric portion, and an adapted first recirculation grille 16 is associable therewith in a downward region and is therefore located at the main room 4 of the cabin 2.

A first duct 18 is associated at a side wall 17 of the box-shaped structure 7 preferably directed away from the first door 5; said first duct is connected to a primary air circuit 19, wherein said air arrives from outside and is pretreated by means of the central conditioning unit.

An electric resistor 20 is provided inside the box-shaped structure 7, at the first duct 18, and allows reheating of the primary air by being connected to an electric power system.

Said electric resistor 20 is interposed between the side wall 17 of the box-shaped structure 7 and a first partition 21 lying transversely to said box-shaped structure 7 and forms a channel for the air sent at a second duct 22, which is also formed on the side wall 17; said second duct 22 conveys the primary air, mixed with the internal air of the cabin, at an adapted diffusion chamber 23 arranged transversely to said cabin and connected to the inside of the main room 4 by means of two openings 24.

The first partition 21 is connected, at the first duct 18, to the discharge outlet of a fan unit 25, which draws air from a compartment 26 located inside the box-shaped structure and formed by the first partition 21 and by a second partition 27.

Inside the compartment 26 a coil unit 28 is provided which is adjacent to the second partition 27 and is connected, by means of an adapted opening formed in said second partition, to a further compartment 29 lying above the first opening 14 and the second opening 15.

The coil unit 28 has of course adapted water pipes 30a and 30b which can be controlled by adapted ball valves 31.

The pipes 30a and 30b are connected to a water cooling system through flexible connections.

An adjustment system is also provided inside the cabin and has a local electronic control unit, with an optional room sensor-remote control, whilst at the second door 32 dividing the lavatory 3 from the main room 4 another opening is provided allowing to discharge the air that arrives from the first duct 18 through a further adapted extraction valve arranged at the ceiling of the lavatory: this allows to remove an amount of air from the main room 4 which is equal to the amount sent into said main room through the first duct 18.

In the illustrated embodiment, the air arriving from the first duct 18 therefore mixes with the air inside the main room 4 which passes through the first grille 16, the coil unit 28, the compartment 26, the fan unit 25, and the electric resistor 20.

As regards the procedure for assembling and disassembling the device, once the covering panel 11 has been opened, the operator can, by acting on an appropriate power supply switch located in a secondary power supply 0 panel preferably arranged in the technical section of the cabin, disconnect the electric power supply of said device and then act at the ball valves 31 to cut off the water supply of the coil unit 28.

Once this has been done, the operator can remove the lower access panel 9 of the box-shaped structure 7, acting at the screw-on knobs 10, and then access all the internal components of said box-shaped structure 7 to check their condition and perform maintenance.

It has thus been observed that the invention achieves the intended aim and objects, an air-conditioning device for cruise ship cabins having been provided which, by being located at the ceiling of the main room of the cabin and composed of a box-shaped structure that is fully removable or has individually removable internal components, allows optimum space saving and a high level of energy recovery by means of the reduction of the conditioning refrigeration power for each cabin.

Optimum energy saving is also achieved because the device can be switched off if the cabin is not occupied or if air cooling and heating is not required.

Safety is also increased because there is no connection between the cabin interior and the corridor, since the air is removed from the cabin independently of said corridor by means of the intake located at the lavatory.

Passenger comfort is therefore increased too, since standardized conditioning of the room can be followed by an independent control of the temperature in each individual cabin.

Use of a (centralized) conditioning unit without fan flow-rate adjustment, and the consequent elimination of mechanical flow-rate regulation devices in the cabinet located in the cabin, are also advantageous.

Moreover, in case of failure of the central conditioning unit, room comfort can still be ensured by the fan coil.

Viceversa, if the fan coil fails, even during the short period required to repair and replace it, a minimum of comfort is ensured by the primary air arriving from the central conditioning unit.

The invention is of course susceptible of numerous modifications and variations, all being within the scope of the same inventive concept.

The materials and the dimensions constituting the individual components of the device can of course be the most adapted according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An air-conditioning device, particularly for cruise ship cabins, comprising an inspectable and removable box-shaped structure (7) which is mounted at the main room (4) of said cabin (2), said box-shaped structure (7) containing an electric resistor (20), a fan (25), and a water coil unit (28) which are individually and independently removable, **characterized in that** the box-shaped structure (7) is ceiling-mounted, and **in that** a first (18) and a second (22) ducts are associated at a side wall (17) of said box-shaped structure (7) which is preferably directed away from the first cabin door (5), said first duct (18) being connected to a primary air circuit (19) in which said air arrives from the outside and is pretreated by means of a central conditioning unit, said second duct (22) being adapted to convey the air, mixed with the cabin air, at an adapted diffusion chamber (23) arranged transversely to said cabin(2) and connected to the inside of said main room (4) through two openings (24) opposite to each other.

2. A device according to claim 1, **characterized in that** it is constituted by the box-shaped structure (7) which can be arranged at the ceiling (8) of said cabin (2) at said main room (4), preferably in a region adjacent to the lavatory (3).

3. A device according to any one or more of claims 1 and 2, **characterized in that** said box-shaped structure (7), which is preferably parallelepiped-shaped, -shaped, can be inspected internally, said box-shaped structure (7) having a lower access panel (9), which can be removed through appropriate screw-on knobs (10) and is in turn closed in a downward region by a covering panel (11) formed in the false ceiling of the cabin (2) and connected thereto by means of appropriate screws (12).

4. A device according to claim 3, **characterized in that** a first (14) and a second (15) openings are formed respectively at said lower access panel (9) and at said covering panel (11), said second opening (15) being provided with a perimetric folded edge, an adapted first recirculation grille (16) located at said main room being associable with said second opening in a downward region.

5. A device according to any one or more of claims 1-4, **characterized in that** the removable electric resistor (20) is provided inside said box-shaped structure at said first duct (18) and is interposed between said side wall (17) and a first partition (21) arranged transversely to said box-shaped structure (7) and adapted to form a channel for the air that is sent at said first duct (18), with the discharge outlet of the removable fan unit (25) which is adapted to produce recirculation in said cabin (2).

6. A device according to claim 5, **characterized in that** a removable coil unit (28) is arranged inside said compartment (26), is adjacent to said second partition, and is connected, by means of an adapted opening formed in said partition, to another compartment (29) lying above said first (14) and second (15) openings, said coil unit (28) having adapted water pipes (30a,30b) which are connected to a refrigeration system and can be controlled by adapted ball valves (31) which can be accessed by an operator.

## Patentansprüche

1. Klimagcrät, insbesondere für Kreuzfahrtschiff-Kabinen, mit einer inspizierbaren und entfernbaren kastenförmigen Struktur (7), die in einem Hauptraum (4) der Kabine (2) angeordnet ist, wobei die kastenförmige Struktur (7) einen elektrischen Widerstand (20), ein Gebläse (25) und eine Wasserspuleneinheit (28) aufweist, die einzeln und unabhängig ausbaubar sind, **dadurch gekennzeichnet, dass** die kastenförmige Struktur (7) an der Decke angeordnet ist und dass eine erste (18) und eine zweite (22) Leitung an einer Seitenwand(17) der kastenförmigen Struktur (7) angeschlossen sind, die bevorzugt von der ersten Kabinentür (5) weggerichtet ist, wobei die erste Leitung (18) mit einem ersten Luftkreislauf(19) verbunden ist, in dem die Luft von außerhalb ankommt und mittels einer zentralen Klimaeinheit vorbehandelt wird, die zweite Leitung (22) vorgesehen ist, die Luft, die mit der Kabinenluft gemischt ist, zu einer angepassten Diffusionskammer (23) zu führen, die quer zur Kabine (2) angeordnet und mit dem inneren des Hauptraumes (4) durch zwei zueinander entgegengesetzt gerichtete Öffnungen (24) verbunden ist.

2. Gerät nach Anspruch 1, **dadurch gekennzeichnet, dass** es durch die kastenförmige Struktur (7) gebildet ist, die an der Decke (8) der Kabine (2) im Hauptraum (4), insbesondere in einem Bereich benachbart des Waschraumes (3) angeordnet werden kann.

3. Gerät nach einem oder mehreren der Ansprüche 1 und 2, **dadurch gekennzeichnet, dass** die kastenförmige Struktur (7), die bevorzugt als Parallelepiped ausgeführt ist, im Inneren inspiziert werden kann, wobei die kastenförmige Struktur (7) eine weiter unten befindliche Zugangswand (9) besitzt, die mittels geeigneter Aufschraubknöpfe (10) entfernt werden kann und in der Folge in einem unteren Bereich mittels einer Abdeckwand (11) verschlossen ist, die in der unechten Decke der Kabine (2) gebildet und mit dieser mittels geeigneter Schrauben (12) verbunden ist.

4. Gerät nach Anspruch 3, **dadurch gekennzeichnet, dass** eine erste (14) und eine zweite (15) Öffnung in der weiter unten befindlichen Zugangswand (9) bzw. der Abdeckwand (11) gebildet sind, wobei die zweite Öffnung (15) mit einer am Umfang gefalteten Kante versehen ist, wobei ein angepasstes erstes Rezirkulationsgitter (16) das im Hauptraum positioniert ist, mit der zweiten Üffnung in einem unteren Bereich verbindbar ist.

5. Gerät nach einem oder mehreren der Ansprüche 1 bis 4, **dadurch gekennzeichnet, dass** der entfernbare elektrische Widerstand (20) innerhalb der kastenförmigen Struktur im Bereich der ersten Leitung (18) angeordnet und zwischen der Seitenwand (17) und einer ersten Trennwand (21) positioniert ist, die sich quer zur kastenförmigen Struktur (7) erstreckt und angepasst ist, um einen Kanal für die Luft, die von der ersten Leitung (18) austritt, zu bilden, mit dem Ausströmausgang der entfembaren Gebläseeinheit (25), die geeignet ist, die Rezirkulation in der Kabine (2) zu erzielen.

6. Gerät nach Anspruch 5, **dadurch gekennzeichnet, dass** eine entfernbare Schlangeneinheit (28) innerhalb des Zwischenraumes (26) angeordnet ist, benachbart der zweiten Trennwand ist und mittels einer angepassten Öffnung, die in dieser Trennwand gebildet ist, mit einem anderen Zwischenraum (29) verbunden ist, der über der ersten (14) und zweiten (15) Öffnung liegt, wobei die Schlangeneinheit (28) mit angepassten Wasserrohren (30a, 30b) versehen ist, die mit einem Kühlsystem verbunden sind und die geregelt werden können mittels adaptierter Kugelventile (31), die einem Bediener zugänglich sind.

## Revendications

1. Dispositif à air conditionné, particulièrement pour les cabines de bateaux de croisière, comprenant une structure en forme de boîte susceptible d'être retirée et contrôlée (7) qui est montée au niveau de la pièce principale (4) de ladite cabine (2), ladite structure en forme de boîte (7) comprenant une résistance électrique (20), un ventilateur (25), et une unité de conduite d'eau (28) qui sont susceptibles d'être retirés de manière individuelle et indépendante, **caractérisé en ce que** la structure en forme de boîte (7) est montée au plafond, et **en ce qu'**une première (18) et une seconde (22) conduites sont associées au niveau d'une paroi latérale (17) de ladite structure en forme de boîte (7) qui est de préférence dirigée à l'écart de la première porte de cabine (5), ladite première conduite (18) étant connectée à un circuit d'air principal (19) dans lequel ledit air arrive à partir de l'extérieur et est prétraité au moyen d'une unité de conditionnement central, ladite seconde conduite (22) étant adaptée pour acheminer l'air, mélangé avec l'air de la cabine, vers une chambre de diffusion adaptée (23) qui est disposée de manière transversale à ladite cabine (2) et connectée à l'intérieur de ladite pièce principale (4) par le biais de deux ouvertures (24) opposées l'une à l'autre.

2. Dispositif selon la revendication 1, **caractérisé en ce qu'**il est constitué par une structure en forme de boîte (7) qui peut être disposée au niveau du plafond (8) de ladite cabine (2) dans ladite pièce principale (4), de préférence dans une région adjacente au cabinet de toilette (3).

3. Dispositif selon l'une quelconque ou plusieurs des revendications 1 ou 2, **caractérisé en ce que** ladite structure en forme de boîte (7), qui est de préférence de forme parallélépipédique, peut être contrôlée de façon interne, ladite structure en forme de boîte (7) ayant un panneau d'accès inférieur (9), qui peut être retiré par le biais de boutons vissables appropriés (10) et qui est à son tour fermé au niveau d'une région dirigée vers le bas par un panneau de couverture (11) formé dans le faux plafond de la cabine (2) et connecté à celui-ci au moyen de vis appropriées (12).

4. Dispositif selon la revendication 3, **caractérisé en ce qu'**une première (14) et une seconde (15) ouvertures sont formées respectivement au niveau dudit panneau d'accès inférieur (9) et au niveau dudit panneau de couverture (11), ladite seconde ouverture (15) étant munie d'un bord plié périmétrique, d'une première grille de recirculation adaptée (16) située au niveau de ladite pièce principale susceptible d'être associée à ladite seconde ouverture dans une région dirigée vers le bas.

5. Dispositif selon l'une quelconque ou plusieurs des revendications 1 à 4, **caractérisé en ce que** la résistance électrique susceptible d'être retirée (20) est prévue à l'intérieur de ladite structure en forme de boite au niveau de ladite première conduite (18) et est interposée entre ladite paroi latérale (17) et une première cloison (21) disposée de manière transversale à ladite structure en forme de boîte (7) et adaptée de manière à former un premier canal pour l'air qui est envoyé au niveau de ladite première conduite (18), la sortie de décharge de l'unité de ventilation susceptible d'être retirée (25) étant adaptée pour réaliser la recirculation dans ladite cabine (2).

6. Dispositif selon la revendication 5, **caractérisé en ce qu'**une unité de bobine susceptible d'être retirée (28) est disposée à l'intérieur dudit compartiment (26), est adjacente à ladite seconde cloison, et est connectée, au moyen d'une ouverture adaptée formée dans ladite cloison, à un autre compartiment (29) situé au-dessus desdites première (14) et seconde (15) ouvertures, ladite unité de bobine (28) étant munie de tuyaux à eau adaptés (30a, 30b) qui sont connectés à un système de réfrigération et qui peuvent être contrôlés au moyen de robinets à boisseau sphérique (31) situés à portée de main d'un opérateur.
